Europäisches Patentamt

European Patent Office

Office européen des brevets

(11) Veröffentlichungsnummer: **0 171 578**
**B1**

(12) # EUROPÄISCHE PATENTSCHRIFT

(45) Veröffentlichungstag der Patentschrift:
30.08.89

(21) Anmeldenummer: 85108270.1

(22) Anmeldetag: 04.07.85

(51) Int. Cl.⁴: **G 21 F 9/04**, B 01 D 11/00, B 01 D 17/02

(54) Verfahren zur Reinigung der organischen Phase bei Flüssig-Flüssig-Extraktionen und Vorrichtung dazu.

(30) Priorität: 01.08.84 DE 3428354

(43) Veröffentlichungstag der Anmeldung:
19.02.86 Patentblatt 86/08

(45) Bekanntmachung des Hinweises auf die Patenterteilung: 30.08.89 Patentblatt 89/35

(84) Benannte Vertragsstaaten:
DE FR GB

(56) Entgegenhaltungen:
DE—B— 1 053 686
FR—A— 1 196 820
US—A— 4 002 558
US—A— 4 279 620

(73) Patentinhaber: Nukem GmbH
Rodenbacher Chaussee 6 Postfach 11 00 80
D-6450 Hanau 11 (DE)

(72) Erfinder: Vietzke, H. Dr. Dipl.-Chem.
Burgstrasse 19
D-6457 Maintal 4 (DE)
Erfinder: Börner, P.
Am Birkenberg 16
D-8755 Alzenau-Michelbach (DE)
Erfinder: Dübel, J.
Egerländerstrasse 2
D-6451 Grosskrotzenburg (DE)

## Beschreibung

Die Erfindung betrifft ein Verfahren und eine Vorrichtung zur Reinigung der organischen Phase bei Flüssig-Flüssig-Extraktionen von Resten der wäßrigen Phase und Schwebstoffen, insbesondere bei Flüssig-Flüssig-Extraktionen in der Kerntechnik, indem die organische Phase vertikal von unten nach oben durch eine Schüttung aus anorganischen Materialien geleitet wird.

Zur Reinigung von Schwermetallen oder Schwermetallgemischen, wie z. B. den Kernbrennstoffen Uran, Thorium oder Plutonium, werden Flüssig-Flüssig-Extraktionsverfahren eingesetzt, die eine selektive Abtrennung dieser Schwermetalle gestatten. Dabei ist es sehr wichtig, daß mit der beladenen organischen Phase weder Schwebstoffe noch emulgierte wäßrige Phase mitgeschleppt werden, damit der Reinigungseffekt nicht verschlechtert wird. Man benutzt deshalb zur Reinigung der organischen Phase seit vielen Jahren Kieselgur Schüttungen in Form von Anschwemmfiltern, die von Zeit zu Zeit gereinigt werden müssen, weil sie sich zusetzen. Dieser Umstand ist besonders bei der Wiederaufarbeitung von Kernbrennstoffen sehr hinderlich, weil die Reinigung fernbedient im heißen Bereich durchgeführt werden muß. Deshalb wurden bisher in diesem Bereich nur selten solche Filter eingesetzt und dafür ein schlechterer Reinigungseffekt in Kauf genommen.

Ein gattungsgemäßes Verfahren und eine gattungsgemäße Vorrichtung sind in « Ullmanns Eccyklopädie der Technischen Chemie, 4. Auflage, 1983, Band 23 (Uran), Verlag Chemie, Weinheim », auf Seite 468 angedeutet, wo Kieselgurfilter vertikal von unten nach oben von der organischen Phase durchströmt werden.

Es war Aufgabe der vorliegenden Erfindung ein Verfahren zur Reinigung der organischen Phase bei Flüssig-Flüssig-Extraktionen von Resten der wäßrigen Phase und von Schwebstoffen zu entwickeln, insbesondere bei Flüssig-Flüssig-Extraktionen in der Kerntechnik, in dem die organische Phase vertikal von unten nach oben durch eine Schüttung aus anorganischen Materialien geleitet wird, das wartungsarm arbeitet und auch in heißen Zellen einsetzbar ist. Außerdem sollte eine entsprechende Vorrichtung geschaffen werden.

Diese Aufgabe wurde erfindungsgemäß dadurch gelöst, daß die organische Phase durch eine Schüttung geleitet wird, die aus einem oder mehreren leicht wasserlöslichen Salzen besteht.

Vorzugsweise besitzen die verwendeten Salze einen hygroskopischen Charakter.

Die Salze der Schüttung nehmen die in der organischen Phase verteilte wäßrige Phase sehr leicht auf, ergeben eine relativ schwere Salzlösung, die nach unten absinkt und das Schüttungsfilter automatisch reinigt. Die Schwebstoffe werden dabei ebenfalls entfernt.

Vorteilhafterweise werden die Salze von oben kontinuierlich oder portionsweise nachgefüllt, so daß immer eine gleichmäßige Schüttungsstärke aufrechterhalten werden kann.

Als leicht wasserlösliche Salze werden beispielsweise Natriumnitrat, Kaliumnitrat, Kalziumnitrat, Magnesiumnitrat oder Kobaltnitrat verwendet, insbesondere bei der Reinigung der organischen Tributylphosphat/Kerosin-Phase bei der Aufarbeitung von Uran, Thorium oder Plutonium aus salpetersauren Lösungen. Vorzugsweise verwendet man Ammoniumnitrat. Aber auch Sulfate und Halogenide sind z. B. einsetzbar. Es hat sich überraschend gezeigt, daß die Filtration mit leicht wasserlöslichen und insbesondere hygroskopischen Salzen nicht nur Feststoffe und Wassertröpfchen zurückhält, sondern auch noch das in der organischen Phase gelöste Wasser herauszieht, das ebenfalls zu einem gewissen Verschleppen von Verunreinigungen im ppm-Bereich beiträgt.

Gegenüber den bekannten Anschwemmfiltern besitzt das erfindungsgemäße Verfahren den Vorteil, daß zur Filtration nicht eine Schicht eines inerten Filterhilfsmittels, wie Kieselgur, Aluminiumoxid oder ähnliches benutzt wird, die später als zusätzlicher Abfall anfallen, sondern leicht wasserlösliche Salze, bei salpetersauren Extraktionen vorzugsweise ein Nitrat und bei schwefelsauren Extraktionen vorzugsweise ein Sulfat, in Form einer Schüttung. Die in der organischen Phase mitgeführten Schwebstoffe bilden die kondensationskeime für die sich bildenden Salzlösungströpfchen aus dem Salz und dem gelösten Wasser und werden so mit nach unten ausgetragen.

Das erfindungsgemäße Verfahren wird vorzugsweise in einer Vorrichtung durchgeführt, bestehend aus einer Säule für die Schüttung, einem unterhalb der Schüttung angebrachten Zulauf und einem oberhalb der Schüttung angebrachten Ablauf für die organische Phase, mit dem Kennzeichen, daß als Schüttung ein wasserlösliches Salz verwendet wird, unterhalb des Zulaufs ein mit einer Niveausonde verbundenes Ventil zum Ablassen der Salzlösung angebracht ist und oberhalb der Schüttung sich ein mit einer Niveausonde über ein Ventil gekoppeltes Vorratsdepot für das Salz der Schüttung befindet.

Vorzugsweise wird unterhalb der Salzschüttung noch eine Glasfaserschicht angebracht.

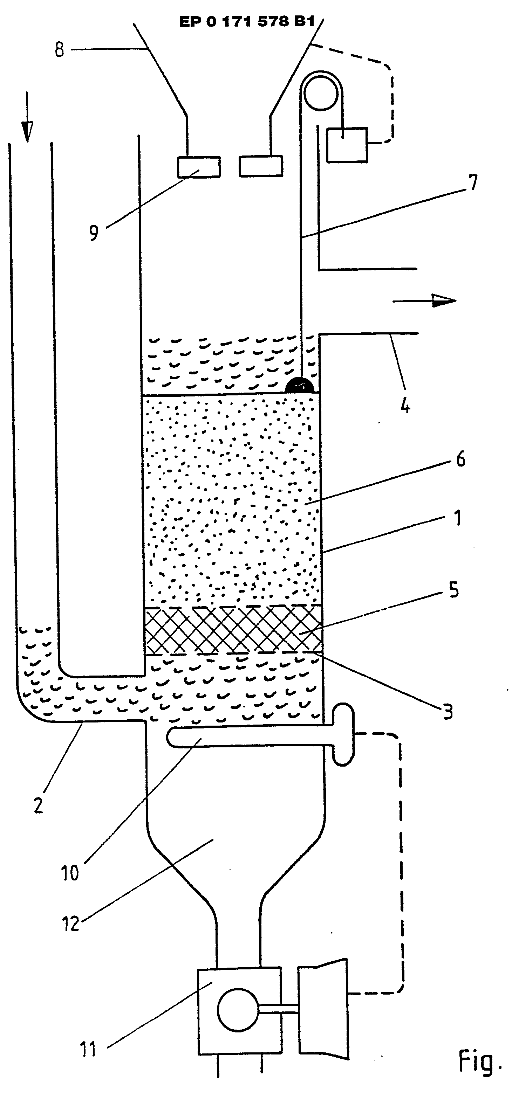

Die Abbildung zeigt schematisch eine beispielhafte Ausführungsform der Vorrichtung im Längsschnitt.

Die Säule (1), vorzugsweise aus dem gleichem Material und von gleichem Durchmesser wie die Extraktionskolonnen, ist mit einem Zulauf (2) und einem Ablauf (4) für die organische Phase versehen. Dazwischen ist auf einem Lochboden (3) eine Glasfaserschicht (5) von 1 bis 5 cm Stärke und eine Schüttung (6) aus einem leicht wasserlöslichen Salz aufgebracht. Die Füllhöhe der Schüttung (6) beträgt vorteilhafterweise den doppelten Säulendurchmesser. Oberhalb der Schüttung (6) befindet sich ein Vorratsdepot (8) für das Salz, das über ein Ventil (9) der Schüttung (6) zugeführt wird, sobald eine entsprechende Niveausonde (7) dazu Befehl gibt. Unterhalb der Schüttung (6) befindet sich ebenfalls eine Niveausonde (10), die über ein Ventil (11) des Abfluss der Salzlösung (12) regelt.

**Patentansprüche**

1. Verfahren zur Reinigung der organischen Phase bei Flüssig-Flüssig-Extraktionen von Resten der wäßrigen Phase und von Schwebstoffen, insbesondere bei Flüssig-Flüssig-Extraktionen in der Kerntechnik, indem die organische Phase vertikal von unten nach oben durch eine Schüttung aus anorganischen Materialien geleitet wird, dadurch gekennzeichnet, daß die organische Phase durch eine Schüttung geleitet wird, die aus einem oder mehreren leicht wasserlöslichen Salzen besteht.

2. Verfahren nach Anspruch 1, dadurch gekennzeichnet, daß die leicht wasserlöslichen Salze einen hygroskopischen Charakter besitzen.

3. Verfahren nach Anspruch 1 und 2, dadurch gekennzeichnet, daß für die Schüttung Ammoniumnitrat verwendet wird.

4. Verfahren nach Anspruch 1 bis 3, dadurch gekennzeichnet, daß die Salze der Schüttung kontinuierlich oder portionsweise von oben ergänzt werden.

5. Vorrichtung zur Durchführung des Verfahrens nach Anspruch 1 bis 4, bestehend aus einer Saüle für die Schüttung, einem unterhalb der Schüttung angebrachten Zulauf und einem oberhalb der Schüttung angebrachten Ablauf für die organische Phase, dadurch gekennzeichnet, daß als Schüttung (6) ein leicht wasserlösliches Salz verwendet wird, unterhalb des Zulaufs (2) ein mit einer Niveausonde (10) verbundenes Ventil (11) zum Ablassen der Salzlösung (12) angebracht ist und oberhalb der Schüttung sich ein mit einer Niveausonde (7) über ein Ventil (9) gekoppeltes Vorratsdepot (8) für das Salz der Schüttung (6) befindet.

**Claims**

1. Process for purifying the organic phase in liquid-liquid extractions from residues of the aqueous phase and from suspended matter, in particular in liquid-liquid extractions in nuclear engineering, by passing the organic phase vertically from bottom to top through a bed of inorganic materials, characterized in that the organic phase is passed through a bed which comprises one or more readily water-soluble salts.

2. Process according to Claim 1, characterized in that the readily water-soluble salts have a high hygroscopic character.

3. Process according to Claim 1 and 2, characterized in that ammonium nitrate is used for the bed.

4. Process according to Claim 1 to 3, characterized in that the salts of the bed are replenished continously or in portions from above.

5. Apparatus for carrying out the process according to Claim 1 to 4, comprising a column for the bed, a supply line attached below the bed and an outlet line for the organic phase attached above the bed, characterized in that the bed (6) used is a readily water-soluble salt, a valve (11) for releasing the salt solution (12) and connected to a level sensor (10) is attached below the supply line (2), and a storage vessel (8) for the salt of the bed (6) and coupled to a level sensor (7) via a valve (9) is located above the bed (6).

**Revendications**

1. Procédé pour l'épuration de la phase organique dans des extractions liquide-liquide d'avec des résidus de la phase aqueuse et des substances en suspension, en particulier dans l'industrie nucléaire, dans lequel on fait passer la phase organique verticalement de bas en haut à travers un lit de matériaux inorganiques, procédé caractérisé en ce que l'on fait passer la phase organique à travers un lit qui est constitué d'un ou plusieurs sels, aisément solubles dans l'eau.

2. Procédé selon la revendication 1, caractérisé en ce que les sels aisément solubles dans l'eau ont un caractère hygroscopique.

3. Procédé selon la revendication 1 ou 2, caractérisé en ce que l'on utilise, pour le lit, du nitrate d'ammonium.

4. Procédé selon l'une quelconque des revendications 1 à 3, caractérisé en ce que les sels du lit sont complétés par le haut, en continu ou par portions.

5. Dispositif pour la mise en oeuvre du procédé selon l'une quelconque des revendications 1 à 4, constitué d'une colonne pour le lit, d'un conduit d'arrivée pour la phase organique placé au-dessous du lit, et d'un conduit de sortie pour la phase organique placé au-dessous du lit, dispositif caractérisé en ce que l'on utilise en tant que lit (6) un sel aisément soluble dans l'eau, une vanne (11) raccordée à un détecteur de niveau (10) et disposée au-dessous du conduit d'arrivée (2) pour le soutirage de la solution de sel (12), et au-dessus du lit (6) se trouve un réservoir (8) pour le sel du lit (6), raccordé à un détecteur de niveau (7) par l'intermédiaire d'une vanne (9).

Fig.